# EUROPEAN PATENT SPECIFICATION

(11) **EP 1 442 083 B1**
(45) Date of publication and mention of the grant of the patent: **18.05.2005**
(21) Application number: 02802750.6
(22) Date of filing: 15.10.2002
(51) Int. Cl.: C09B 61/00, C09B 9/00, A23K 1/16, A23K 1/18

(54) **PIGMENT**
PIGMENT
PIGMENT

(30) Priority: 07.11.2001 NO 20015442
(43) Date of publication of application: 04.08.2004
(73) Proprietor: NORSK HYDRO ASA, 0240 Oslo (NO)
(72) Inventor: BREIVIK, Harald, N-3942 Skjelsvik (NO); AANESEN, Berit, Annie, N-3737 Skien (NO); KULAS, Elin, N-3970 Langesund (NO)
(74) Representative: Wallace, Sheila Jane
(86) International application number: PCT/NO2002/000373
(87) International publication number: WO 2003/040238

(56) References cited:
- EP-A2- 1 186 245
- WO-A1-00/62625
- WO-A1-97/35491
- DATABASE WPI Week 199603, Derwent Publications Ltd., London, GB; Class B05, AN 1996-026969, XP002977342 & JP 7 300 421 A (ITAN-N ITANO REITO KK) 14 November 1995

## Description

This invention relates to a new pigment in feed for salmonids, a new feed comprising this pigment and use of the pigment. This pigment is also useful as an agent for enhancing the growth of farmed fish.

In feed for farmed salmonids pigment has to be added to obtain the desired colour of the fish flesh. The pigment most commonly used is astaxanthin, but other pigments like for instance cantaxanthin, may be employed. These pigments are all carotenoids. Such pigments are very unstable with regard to exposure to air and elevated temperatures. The pigments are therefore to a certain extent degraded during feed processing and storage.

Commercially available astaxanthin products are furthermore very expensive and their biological retention is very low. Astaxanthin is as mentioned above a rather unstable compound, which of course is a further drawback. The low stability of astaxanthin is due to oxidation. Commercial pigment products are formulated in order to avoid or reduce oxidation. One typical formulation for astaxanthin is with gelatine and starch. The formulations used are often, however, not optimal with respect to biological availability of the pigment.

In WO-A-0 062 625 a new pigment that to some extent solved the above given problems was disclosed. This pigment comprises a diester of astaxanthin prepared with a carboxylic acid, wherein the carboxylic acid is an omega-3 fatty acid and/or a carboxylic acid having from 1-12 carbon atoms. A feed for salmonids comprising the said diester of astaxanthin, and the use of the said diester of astaxanthin as a pigment in feed for salmonids are also disclosed in WO-A-0 062 625.

In EP-A-1 404 187 the use of the diester of astaxanthin from WO-A-0 062 625 for enhancing the growth of farmed fish is disclosed.

It is expected that diesters of cantaxanthin and other carotenoids repared with the same carboxylic acids as defined in WO-A-0 062 625 and EP-A-1 404 187 will give similar effects as described in the two said patent specifications when used as pigments and growth enhancers, respectively.

By WO-A-0 062 625 a more stable and more biologically available pigment than free astaxanthin and other commercial pigment products was found. Even though the pigment according to WO-A-0 062 625 is an improvement compared to free astaxanthin and other commercial pigment products, it is not optimal, and it is still a strong desire and need in the aquaculture industry to find stable and even more biologically effective pigments useful in production of feed for salmonids.

Astaxanthin has two asymmetric carbon atoms at the 3 and 3' positions and can exist as three optical isomers; the enantiomers (3R,3'R) and (3S,3'S), and the *meso* form (3R,3'S) (Figure 1).

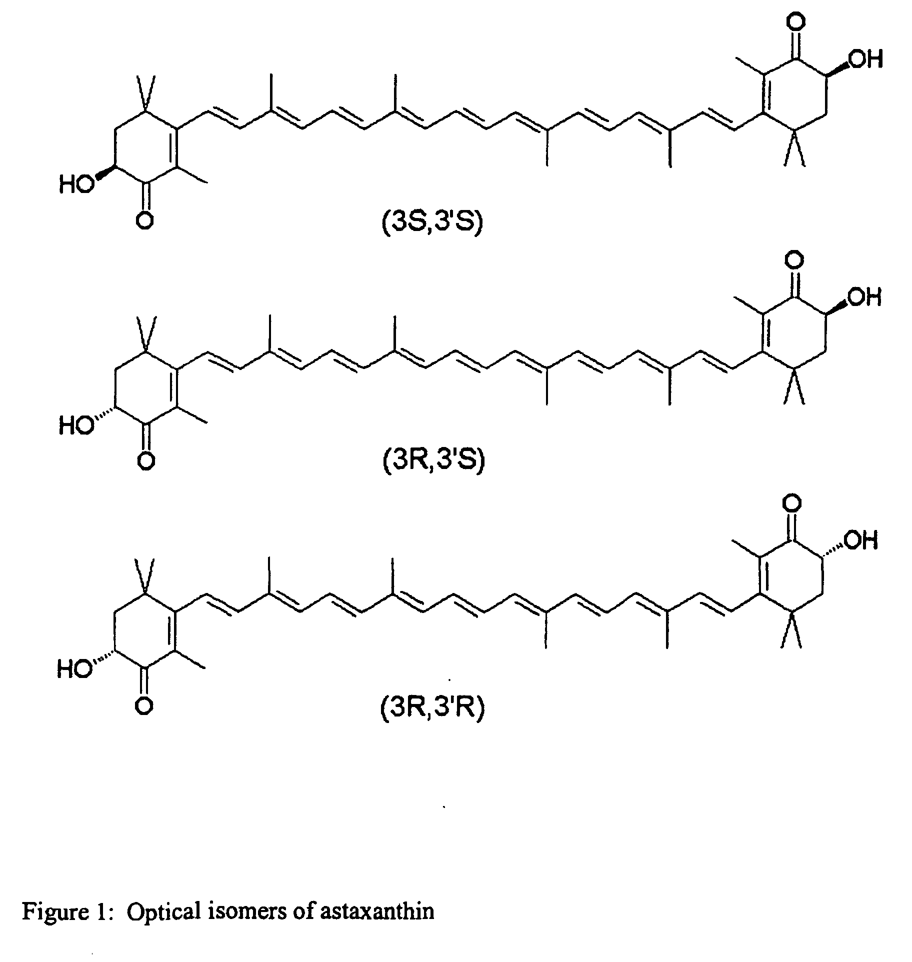

Chemical synthesis gives equal mixtures of these optical isomers. Commercially manufactured synthetic astaxanthin, which currently is the form of the pigment predominantly added to the feed in salmonid aquaculture, thus is a mixture of the (3R,3'R)-, *meso-,* and (3S, 3'S)-astaxanthin in the approximate ratio of 1 : 2 : 1. Astaxanthin from natural sources, on the other hand, varies widely in the composition of optical isomers, depending on the source in question. The predominant isomer in the algae *Haematococcus pluvialis* is (3S,3'S), while the yeast *Phaffia rhodozyma* mainly has (3R,3'R)-astaxanthin (Johnson, E.A. and An, G.H., CRC Critical Reviews in Biotechnology 11 (1991) 297).

It is generally agreed that when fed a diet containing astaxanthin in the free form, i.e. unesterified, the optical isomers of astaxanthin are equally well absorbed and deposited in the flesh of salmonid fishes (Foss, P. *et al*., Aquaculture 41 (1984) 213-226; Kamata et al., Nippon Suisan Gakkaishi 56 (1990) 789). The salmonids may, on the other hand, display a certain selectivity with regard to absorption and deposition of astaxanthin optical isomers when fed a diet containing the ester form of the pigment. It is known that salmonids utilise a diester, dipalmitate, of (3R,3'R)-astaxanthin better than dipalmitate of (3S,3'S)-astaxanthin (Torrissen, O.J. et al., CRC Critical Reviews in Aquatic Sciences 1 (1989) 209; Foss, P., et al., Aquaculture 65 (1987) 293; Katsuyama et al., Comp. Biochem. Physiol. 86B (1987) 1; Schiedt, K., et al., Pure & Appl. Chem. 57 (1985) 685). However, wild salmon has approximately the same astaxanthin stereoisomer distribution in the flesh as what is present in their food, even though the food mainly contains diesters ( Lura, H., et al., Can. J. Fish Aquat. Sci., 48 (1991) 429; Turujman, S.A., et al., JAOAC 80 (1997) 622). This suggests that the potential isomeric effect is moderate.

As described in Example 1 below, hydrolysis experiments were performed with a diester of synthetic astaxanthin with omega-3 fatty acids and a crude enzyme preparation from salmon intestines in the same way as described before (WO-A-0 062 625). The reaction products were analysed with regard to stereoisomer composition. The results are given in Table 1.

### Example 1

A diester of astaxanthin was prepared by conventional chemical synthesis from commercially obtained synthetic astaxanthin and an omega-3 fatty acid concentrate containing more than 90% omega-3 fatty acids, mainly EPA (eicosapentaenoic acid) and DHA (docosahexaenoic acid). The astaxanthin used had been prepared by chemical synthesis, and the distribution of the optical isomers (3R,3'R), *meso* and (3S,3'S) was 25.9 : 50.2 : 23.9, respectively, determined as described for the diol fraction.

The starting astaxanthin diester was treated with a freshly prepared enzyme mixture from the intestines of recently fed salmon (*Salmo salar*) for 48 hours. The pigment was then separated into three fractions by preparative thin-layer chromatography; a diol fraction with both hydroxyl groups hydrolysed, a monoester fraction with one hydroxyl group hydrolysed, and a remaining diester fraction. The astaxanthin in the diol fraction was converted into the corresponding diesters of (-)-camphanic acid by reaction with (-)-camphanoyl chloride, and the distribution of astaxanthin optical isomers were determined by high-performance liquid chromatography (HPLC) of the dicamphanates. The astaxanthin in the monoester fraction was first converted to diol in a hydrolysis reaction catalysed by the enzyme cholesterol esterase and subsequently treated with (-)-camphanic acid and analysed as described above. Attempts to convert the astaxanthin in the remaining diester fraction to diol using cholesterol esterase were not successful, as complete conversion was not obtained. The distribution of optical isomers of astaxanthin in the remaining diester fraction was therefore not determined.

The salmon intestine enzyme mixture displayed an unexpectedly high enantioselectivity toward the R-configuration of the astaxanthin (Table 1). The astaxanthin diol fraction, i.e. free astaxanthin, had almost exclusively the (3R,3'R)-configuration, with traces of the *meso*-form. The monoester fraction contained predominantly the *meso*-form of astaxanthin. The distribution of astaxanthin optical isomers in the remaining unhydrolysed diester fraction was not obtained, but considering the composition of the starting diesters, the diol and the monoester fractions, it is highly likely that the remaining diester fraction predominantly has the (3S,3'S)-form of astaxanthin. The relative molar amounts of pigment in the different fractions were in accordance with what was expected based on the distribution of optical isomers.

**Table 1.**

| Results from the study of the enantioselectivity of enzymes from salmon intestines for the hydrolysis of astaxanthin omega-3 fatty acid diester. | | | |
|---|---|---|---|
| Pigment fraction | (3R,3'R) | *meso* | (3S,3'S) |
| Starting diester | 25.9 | 50.2 | 23.9 |
| Monoesters (after enzyme treatment) | 3.5 | 93.1 | 3.4 |
| Diol (after enzyme treatment) | 94.6 | 5.4 | ND^{*a*} |

| | | | |
|---|---|---|---|
| ^{*a*} ND; not detected | | | |

Based on the literature cited above, one could expect some degree of enantioselectivity towards the R-configuration. However, as the isomer composition of astaxanthin in wild salmon is approximately the same as in the food, the extreme specificity that has been demonstrated with the esters of the present invention is highly surprising.

This unexpected finding is very important. From WO-A-0 062 625 it is known that there is a relationship between increased enzymatic hydrolysis and increased deposition of astaxanthin in salmon muscle. The very different rate of hydrolysis between the (3R,3'R)- and (3S,3'S)-isomers that is demonstrated in the present invention, shows that astaxanthin diester based on the (3R,3'R)-isomer will have a significantly higher biological uptake than a diester based on the (3S,3'S)-isomer. As the person skilled in the art will know, a high biological uptake of astaxanthin indicates good pigmentation effect.

An astaxanthin diester product based on a purified stereoisomeric composition will obviously be more expensive than a racemic or less purified product. The indications in the literature regarding a certain preference of uptake of the (3R,3'R)-isomer have not been so as to suggest to those skilled in the art that the high cost of producing a (3R,3'R)-diester would be compensated for by increased bioavailability. This is underlined by a statement from a producer of astaxanthin from the yeast *Phaffia rhodozyma*. Astaxanthin from *P. rhodozyma* is known to contain mainly the (3R,3'R)-isomer. The producer states that a benefit from using the *Phaffia* product is that it contains mainly unesterified astaxanthin, which is known to be utilised better than esterified astaxanthin (Igene Biotechnology Inc.'s brochure: 'AstaXin® Naturally!', which was distributed at the Aquanor exhibition in Trondheim August 2001). On the contrary, the present inventors have shown that the production of a diester of (3R,3'R)-astaxanthin containing omega-3 fatty acids, will give a significantly higher uptake than what is found with the (3S,3'S) esterified product. The same effect will of course be observed by using a diester of synthetic or natural (3R,3'R)-astaxanthin. Based on the teaching of WO-A-0 062 625, the inventors have assumed that utilisation of a diester of (3R,3'R)-astaxanthin and a short chain fatty acid will have similar benefits.

Astaxanthin is very expensive, and the addition of astaxanthin or other carotenoids is assumed to be the highest cost factor in the production of salmon feed. The present invention shows that it will be of commercial value to produce a pigment that consist of the diester of (3R,3'R)-astaxanthin with a carboxylic acid, wherein the carboxylic acid is an omega-3 fatty acid and/or a short chain acid.

For simplicity, in the following the wording "omega-3 fatty acid" is also used to denote a concentrate of omega-3 fatty acids. This will be obvious for the person skilled in the art.

It is a main object of the invention to provide a pigment for feed to salmonids that is stable and more biologically effective than previously known pigments for salmonids.

Another object of this invention is to provide a pigment that can be added to the feed in less amounts than previously known pigments and still give a satisfactory pigmentation of the flesh. This and other objects are achieved by the attached claims.

A preferred embodiment of the present invention is a diester of (3R,3'R)-astaxanthin wherein the diester is prepared with an omega-3 fatty acid comprising a total amount of eicosapentaenoic acid (EPA) (all-*cis* C20:5 n-3) and/or docosahexaenoic acid (DHA) (all-*cis* C22:6 n-3) from 18 to 100%.

A more preferred embodiment of the present invention is a diester of (3R,3'R)-astaxanthin wherein the diester is prepared with an omega-3 fatty acid comprising a total amount of eicosapentaenoic acid (EPA) (all-cis C20:5 n-3) and/or docosahexaenoic acid (DHA) (all-*cis* C22:6 n-3) from 40 to 100%.

Another preferred embodiment of the present invention is a diester of (3R,3'R)-astaxanthin wherein the diester is prepared with an omega-3 fatty acid comprising an amount of eicosapentaenoic acid (EPA) (all-*cis* C20:5 n-3) from 8 to 98% and/or an amount of docosahexaenoic acid (DHA) (all-*cis* C22:6 n-3) from 8 to 98%.

A more preferred embodiment of the present invention is a diester of (3R,3'R)-astaxanthin wherein the diester is prepared with an omega-3 fatty acid comprising an amount of eicosapentaenoic acid (EPA) (all-*cis* C20:5 n-3) from 25 to 98% and/or an amount of docosahexaenoic acid (DHA) (all-*cis* C22:6 n-3) from 15 to 98%.

Still another preferred embodiment of the present invention is a diester of (3R,3'R)-astaxanthin wherein the diester is prepared with an omega-3 fatty acid comprising approximately 50% eicosapentaenoic acid (EPA) (all-*cis* C20:5 n-3) and approximately 35% docosahexaenoic acid (DHA) (all-*cis* C22:6 n-3).

Still another preferred embodiment of the present invention is a diester of (3R,3'R)-astaxanthin wherein the diester is prepared with a short chain carboxylic acid being formic acid.

The astaxanthin product according to the present invention may be produced from free astaxanthin that is obtained by chemical, biochemical or enzymatic syntheses. Preferably, the astaxanthin used for producing the astaxanthin products according to the present invention is obtained from natural sources.

The fungus *Phaffia rhodozyma* is known to produce high degree of (3R,3'R)-astaxanthin in non-esterified form. A preferred embodiment of the present invention is therefore a diester of (3R,3'R)-astaxanthin as defined above prepared from astaxanthin produced by *P. rhodozyma*.

The astaxanthin product according to the present invention comprises a diester of predominantly (3R,3'R)-astaxanthin prepared with a carboxylic acid wherein the said carboxylic acid is an omega-3 fatty acid and/or a carboxylic acid having from 1-12 carbon atoms.

Preferably the astaxanthin product comprises a diester of 50-100% (3R,3'R)-astaxanthin, more preferred the astaxanthin product comprises a diester of 80-100% (3R,3'R)-astaxanthin, and most preferred the astaxanthin product comprises a diester of 90-100% (3R,3'R)-astaxanthin.

## Claims

1. Pigment comprising a diester of predominantly (3R,3'R)-astaxanthin, canthaxanthin or other carotenoids that can be used for pigmentation of salmonids wherein the diester is prepared with a carboxylic acid, **characterised in that** the carboxylic acid is an omega-3 fatty acid and/or a carboxylic acid having from 1-12 carbon atoms.

2. Pigment according to claim 1, wherein the diester is 50-100% (3R,3'R)-astaxanthin, preferably 80-100% (3R,3'R)-astaxanthin, more preferably 90-100% (3R,3'R)-astaxanthin.

3. Pigment according to claim 1 or claim 2, wherein the omega-3 fatty acid comprises a total amount of eicosapentaenoic acid (EPA) (all-*cis* C20:5 n-3) and/or docosahexaenoic acid (DHA) (all-*cis* C22:6 n-3) from 18 to 100%, preferably from 40 to 100%.

4. Pigment according to claim 1 or claim 2, wherein the omega-3 fatty acid comprises from 8 to 98%, preferably from 25 to 98%, more preferably approximately 50% of eicosapentaenoic acid (EPA) (all-*cis* C20:5 n-3), and/or from 8 to 98%, preferably from 15 to 98%, more preferably approximately 35% of docosahexaenoic acid (DHA) (all-*cis* C22:6 n-3).

5. Pigment according to any one of the preceding claims, wherein the carboxylic acid having from 1-12 carbon atoms is formic acid.

6. Pigment according to any one of the preceding claims, wherein the diester is prepared from astaxanthin obtained from a natural source, preferably *Phaffia rhodozyma*.

7. Feed for salmonids comprising 25-70% by weight of proteins, 5-60% by weight of lipids and 0-40% by weight of carbohydrates, and pigment in combination with 0-15% by weight of one or more additional components; such as fillers, adhesives, preservatives, vitamins and minerals, wherein the pigment is a diester of predominantly (3R,3'R)-astaxanthin, canthaxanthin or other carotenoids that can be used for pigmentation of salmonids prepared with an omega-3 fatty acid and/or a short chain carboxylic acid.

8. Use of a diester of predominantly (3R,3'R)-astaxanthin, canthaxanthin or other carotenoids that can be used for pigmentation of salmonids prepared with an omega-3 fatty acid and/or a short chain carboxylic acid, for pigmentation of salmonids or as a pigment in feed for salmonids.

9. Use of a diester of predominantly (3R,3'R)-astaxanthin, canthaxanthin or other carotenoids that can be used for pigmentation of salmonids prepared with an omega-3 fatty acid and/or a short chain carboxylic acid, for enhancing the growth of farmed fish, as a growth-enhancing agent in feed for farmed fish, as an appetizer in feed for farmed fish, for increasing the utilization of the feed for farmed fish or for optimising health and well-being of farmed fish.

10. Use according to claim 9, wherein the farmed fish are salmonids.

## Patentansprüche

1. Pigment, bestehend aus einem Diester aus vorwiegend (3R,3'R)-Astaxanthin, Canthaxanthin oder anderen Carotinoiden, die für die Pigmentierung von Salmoniden verwendet werden können, wobei der Diester mit einer Carbonsäure hergestellt wird, **dadurch gekennzeichnet, dass** die Carbonsäure eine Omega-3-Fettsäure und/oder eine Carbonsäure mit 1-12 Kohlenstoffatomen ist.

2. Pigment nach Anspruch 1, wobei der Diester 50-100 % (3R,3'R)-Astaxanthin, vorzugsweise 80-100 % (3R,3'R)-Astaxanthin, noch besser 90-100 % (3R,3'R)-Astaxanthin ist.

3. Pigment nach Anspruch 1 oder Anspruch 2, wobei die Omega-3-Fettsäure eine Gesamtmenge Eicosapentaensäure (EPA) (all-cis C20:5 n-3) und/oder Docosahexaensäure (DHA) (all-*cis* C22:6 n-3) von 18 bis zu 100 %, vorzugsweise von 40 bis zu 100 % enthält.

4. Pigment nach Anspruch 1 oder Anspruch 2, wobei die Omega-3-Fettsäure von 8 bis zu 98 %, vorzugsweise von 25 bis zu 98 %, noch besser ungefähr 50 % Eicosapentaensäure (EPA) (all-*cis* C20:5 n-3) und/oder von 8 bis zu 98 %, vorzugsweise von 15 bis zu 98 %, noch besser ungefähr 35 % Docosahexaensäure (DHA) (all-*cis* C22:6 n-3) enthält.

5. Pigment nach einem der vorstehenden Ansprüche, wobei die Carbonsäure mit 1-12 Kohlenstoffatomen Methansäure ist.

6. Pigment nach einem der vorstehenden Ansprüche, wobei der Diester aus Astaxanthin hergestellt wird, das aus einem natürlichen Ausgangsmaterial, vorzugsweise aus *Phaffia rhodozyma*, gewonnen wird.

7. Futtermittel für Salmoniden, bestehend aus 25-70 Gew.-% Proteinen, 5-60 Gew.-% Lipiden und 0-40 Gew.-% Kohlenhydraten sowie Pigment in Kombination mit 0-15 Gew.-% eines oder mehrerer zusätzlicher Bestandteile, wie Füllstoffe, Haftmittel, Konservierungsmittel, Vitamine und Minerale, wobei das Pigment ein Diester aus vorwiegend (3R,3'R)-Astaxanthin, Canthaxanthin oder anderen für die Pigmentierung von Salmoniden verwendbaren Carotinoiden ist und mit einer Omega-3-Fettsäure und/oder einer kurzkettigen Carbonsäure hergestellt wird.

8. Verwendung eines mit einer Omega-3-Fettsäure und/oder einer kurzkettigen Carbonsäure hergestellten Diesters aus vorwiegend (3R,3'R)-Astaxanthin, Canthaxanthin oder anderen für die Pigmentierung von Salmoniden verwendbaren Carotinoiden zur Pigmentierung von Salmoniden oder als Pigment in Futtermitteln für Salmoniden.

9. Verwendung eines mit einer Omega-3-Fettsäure und/oder einer kurzkettigen Carbonsäure hergestellten Diesters aus vorwiegend (3R,3'R)-Astaxanthin, Canthaxanthin oder anderen für die Pigmentierung von Salmoniden verwendbaren Carotinoiden zur Förderung des Wachstums von Zuchtfischen, als Wachstumsförderungsmittel in Futtermitteln für Zuchtfische, als Appetitsanreger in Futtermitteln für Zuchtfische, zur Steigerung der Ausnutzung des Futtermittels für Zuchtfische oder zur Optimierung der Gesundheit und des Wohlbefindens von Zuchtfischen.

10. Verwendung nach Anspruch 9, wobei die Zuchtfische Salmoniden sind.

## Revendications

1. Pigment comprenant un diester principalement de la (3R,3'R)-astaxanthine, de la canthaxanthine ou d'autres caroténoïdes, susceptible d'être utilisé pour la pigmentation des salmonidés, dans lequel le diester est préparé avec un acide carboxylique, **caractérisé en ce que** l'acide carboxylique est un acide gras de type oméga 3 et/ou un acide carboxylique possédant de 1 à 12 atomes de carbone.

2. Pigment selon la revendication 1, dans lequel le diester est un diester à 50-100 % de la (3R,3'R)-astaxanthine, de préférence un diester à 80-100 % de la (3R,3'R)-astaxanthine et, de façon encore préférée, un diester à 90-100 % de la (3R,3'R)-astaxanthine.

3. Pigment selon les revendications 1 ou 2, dans lequel l'acide gras de type oméga 3 comprend, au total, de l'ordre de 18 à 100 % et, de préférence, de l'ordre de 40 à 100 % d'acide eicosapentaénoïque (EPA) (tout cis C20:5 n-3) et/ou d'acide docosahexaénoïque (DHA) (tout cis C22:6 n-3).

4. Pigment selon les revendications 1 ou 2, dans lequel l'acide gras de type oméga 3 comprend de 8 à 98 %, de préférence de 25 à 98 % et, de façon encore préférée, environ 50 % d'acide eicosapentaénoïque (EPA) (tout cis C20:5 n-3) et/ou de 8 à 98 %, de préférence de 15 à 98 % et, de façon encore préférée, environ 35 % d'acide docosahexaénoïque (DHA) (tout cis C22:6 n-3).

5. Pigment selon l'une quelconque des revendications précédentes, dans lequel l'acide carboxylique possédant de 1 à 12 atomes de carbone est l'acide formique.

6. Pigment selon l'une quelconque des revendications précédentes, dans lequel le diester est préparé à partir d'astaxanthine provenant d'une source naturelle, de préférence *Phaffia rhodozyma*.

7. Nourriture pour salmonidés contenant de 25 à 70 % en poids de protéines, de 5 à 60 % en poids de lipides et de 0 à 40 % en poids de glucides, en même temps qu'un pigment associé à 0 à 15 % en poids d'un ou plusieurs composants supplémentaires, tels que charges, agglutinants, conservateurs, vitamines et minéraux, dans lequel le pigment est un diester principalement de la (3R,3'R)-astaxanthine, de la canthaxanthine ou d'autres caroténoïdes, susceptible d'être utilisé pour la pigmentation des salmonidés et préparé avec un acide gras de type oméga 3 et/ou un acide carboxylique à chaîne courte.

8. Utilisation d'un diester principalement de la (3R,3'R)-astaxanthine, de la canthaxanthine ou d'autres caroténoïdes, susceptible d'être utilisé pour la pigmentation des salmonidés et préparé avec un acide gras de type oméga 3 et/ou un acide carboxylique à chaîne courte, pour la pigmentation des salmonidés ou comme pigment dans la nourriture pour salmonidés.

9. Utilisation d'un diester principalement de la (3R,3'R)-astaxanthine, de la canthaxanthine ou d'autres caroténoïdes, susceptible d'être utilisé pour la pigmentation des salmonidés et préparé avec un acide gras de type oméga 3 et/ou un acide carboxylique à chaîne courte, pour stimuler la croissance des poissons d'élevage, comme agent stimulateur de croissance dans la nourriture destinée aux poissons d'élevage, comme stimulateur d'appétit dans la nourriture destinée aux poissons d'élevage, pour renforcer l'utilisation de la nourriture destinée aux poissons d'élevage ou pour optimiser l'état de santé et le bien-être des poissons d'élevage.

10. Utilisation selon la revendication 9, les poissons d'élevage étant des salmonidés.
